# EUROPÄISCHE PATENTANMELDUNG

(11) **EP 0 579 001 A1**
(43) Veröffentlichungstag der Anmeldung: **19.01.1994**
(21) Anmeldenummer: 93109981.6
(22) Anmeldetag: 23.06.1993
(51) Int. Cl.: D21C 5/02, D21B 1/32

(54) **Verfahren zum Aufbereiten von Altpapier**

(30) Priorität: 17.07.1992 DE 4223485
(71) Anmelder: J.M. Voith GmbH, D-89522 Heidenheim (DE)
(72) Erfinder: Ortner, Herbert, Dr., D-7920 Heidenheim (DE); Pfalzer, Lothar, Dr., D-7920 Heidenheim (DE); Fischer, Siegbert, D-7920 Heidenheim (DE)
(74) Vertreter: Weitzel, Wolfgang, Dr.-Ing. Patentanwalt

(57) **Zusammenfassung**

Die Erfindung betrifft ein Verfahren zum Aufbereiten von Altpapier mit Vorreinigungs- und Früh- bzw. Vorentwässerungsstufe als Waschstufe, die Druckfarben vor der Hauptreinigung zum großen Teil aus dem Kreislauf in einen Zweigkreislauf mit angepaßter Reinigungsstufe des Rückwassers der Vorentwässerungsstufe abscheidet, gekennzeichnet bei der Anwendung auf ein Gemisch, das sowohl mit hydrodispergierbaren (hydrophilen) als auch anderen Farben bedrucktes Altpapier enthält, durch die folgenden Merkmale:
a) im Zweigkreislauf einschließlich bis zur ersten Vorentwässerungsstufe wird im wesentlichen ein saures Milieu mit einem pH-Wert zwischen 6 und 7 eingestellt,
b) im nachfolgenden Kreislauf wird ein alkalisches Milieu mit einem pH-Wert zwischen 9 und 11 eingestellt,
c) im zweiten Kreislauf für die nicht hydrodispergierbaren (hydrophoben) Druckfarben ist eine Dispergierstufe vorgesehen,
d) im zweiten Kreislauf ist eine Stufe selektiver Flotation vorgesehen.

## Beschreibung

Die Erfindung betrifft ein Verfahren entsprechend dem Oberbegriff des Anspruchs 1. Ein solches Verfahren ist bekannt aus DE 28 13 448. Man hat erkannt, daß durch frühzeitiges Entfernen von Druckfarben durch Wäsche, z.B. in Wasserextraktoren, das Aufbereitungsverfahren für Altpapier wesentlich erleichtert und verbessert wird, insbesondere um eine höhere Reinheit von Druckfarben zu erreichen.

Die Aufgabe der Erfindung ist es, ein solches Verfahren für ein Gemisch anzugeben, das sowohl hydrodispergierbare Farben als auch andere Druckfarben enthaltendes Altpapier aufweist.

Diese Aufgabe wird erfindungsgemäß durch die Merkmale des kennzeichnenden Teils des Anspruchs 1 gelöst.

Wasserdispergierbare Farben enthalten Dispergatoren. Diese verhindern einen konventionellen Flotationsprozeß.

Erfindungsgemäß werden diese Dispergatoren zuerst ausgewaschen und danach erfolgt erst die konventionelle Flotation. Das Verfahren teilt sich in mindestens zwei getrennte Kreisläufe auf, wobei im ersten einschließlich eines Zweikreislaufs Chemikalien zugegeben werden, die speziell auf die Ablösung wasserdispergierbarer Farben eingestellt sind. Es hat sich gezeigt, daß eine neutrale bis leicht saure Fahrweise in diesem Kreislauf vorteilhaft ist. Im weiteren Kreislauf, der die Stufe mit der selektiven Flotation enthält, werden dafür angepaßte Chemikalien, z.B. Sammler, wie Seife und Wasserhärter, und z.B. Natriumhydroxid für die Einstellung der Alkalität mit einem pH-Wert vorzugsweise zwischen 9 und 11 hier einzustellen. Hier wird vorzugsweise auch eine Dispergierung vorgesehen und bei schwer ablösbaren Druckfarben weiterhin ein Dickstoff-Reaktionsturm nachgeschaltet.

Das entzogene Waschwasser wird als Rückwasser nach entsprechender Reinigung wieder zurückgeführt. Als Reinigungsstufe kann dabei eine Totalflotation (Mikroflotation) eingesetzt werden, wobei im allgemeinen Flockungsmittel zugegeben werden. Für die Waschstufen kommen besonders geeignete Entwässerungsmaschinen zum Einsatz.

Nachfolgend wird die Erfindung anhand der Skizze beschrieben.

In derselben ist zunächst eine Auflösestufe 1, z.B. in einem Stofflöser vorgesehen, woran sich eine Reinigungsstufe 2 mit Hydrozyklonen und Siebsortiergeräten anschließt. Es folgt dann eine Entwässerungsstufe 3 mit starker Waschwirkung, wobei entsprechende waschaktive Substanzen, insbesondere Tenside, verwendet werden müssen. Das Rückwasser wird einer Reinigungsbehandlung, vorzugsweise in einer Mikroflotationsanlage, unterworfen, wobei im allgemeinen auch Flockungsmittel notwendig sind.

Im Hauptkreislauf schließt sich eine Dispergierstufe 4 und eine Stufe mit selektiver Flotation 5 für die hydrophoben (nicht hydrodispergierbaren) Druckfarben an. Die Flotation erfolgt unter Einwirkung von Sammlern, wie Seife, bei entsprechender Wasserhärte. Es erfolgt hier oder vorher auch die Zugabe von z.B Natriumhydroxid, um die alkalische Fahrweise mit einem pH-Wert zwischen 9 und 11 hier einzustellen. Im ersten Kreislauf hatte man einen neutralen bis sauren Kreislauf, wobei schon im Stofflöser diese Einstellung z.B. mittels Schwefelsäure erfolgen kann. Der pH-Wert soll dort zwischen 6 und 7 liegen. Die Dosierstelle für die Chemikalien ist durch gestrichelte Pfeile an den Leitungen angedeutet.

Die Behandlung des Waschwassers im ersten bzw. zweiten Kreislauf erfolgt in der Mikroflotationsstufe 6. Ist im zweiten oder Hauptkreislauf auch eine Wasch- oder Entwässerungsbehandlung 8 vorgesehen, wird auch hier das Rückwasser vorzugsweise in einer Mikroflotationsanlage gereinigt und wieder vor die Flotation zurückgeführt. Zwischen der Flotationsstufe und der Entwässerungsstufe kann eine Reinigungs- oder Sortierstufe, insbesondere aus Siebsortiergeräten bestehend, vorgesehen sein.

Als Waschmaschinen kommen Entwässerungsapparate, wie Wasserextraktoren oder Sieb-Schneckenpressen, vorzugsweise in Frage. In den angegebenen Bereichen kann von den pH-Werten auch geringfügig abgewichen werden.

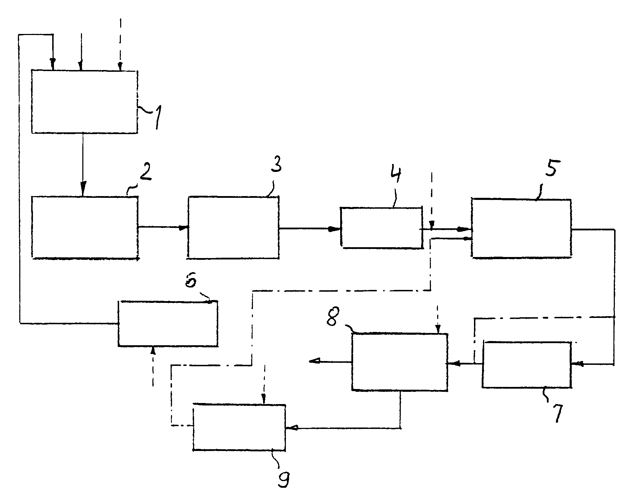

## Patentansprüche

1. Verfahren zum Aufbereiten von Altpapier mit Vorreinigungs- und Früh- bzw. Vorentwässerungsstufe als Waschstufe, die Druckfarben vor der Hauptreinigung zum großen Teil aus dem Kreislauf in einen Zweigkreislauf mit angepaßter Reinigungsstufe des Rückwassers der Vorentwässerungsstufe abscheidet, gekennzeichnet bei der Anwendung auf ein Gemisch, das sowohl mit hydrodispergierbaren (hydrophilen) als auch anderen Farben bedrucktes Altpapier enthält, durch die folgenden Merkmale:
a) im Zweigkreislauf einschließlich bis zur ersten Vorentwässerungsstufe wird im wesentlichen ein saures Milieu mit einem pH-Wert zwischen 6 und 7 eingestellt,
b) im nachfolgenden Kreislauf wird ein alkalisches Milieu mit einem pH-Wert zwischen 9 und 11 eingestellt,
c) im zweiten Kreislauf für die nicht hydrodispergierbaren (hydrophoben) Druckfarben ist eine Dispergierstufe vorgesehen,
d) im zweiten Kreislauf ist eine Stufe selektiver Flotation vorgesehen.

2. Verfahren nach Anspruch 1, dadurch gekennzeichnet, daß für die Reinigung des rückzuführenden Waschwassers eine Mikroflotationsbehandlung jeweils vorgesehen ist.

3. Verfahren nach Anspruch 2, dadurch gekennzeichnet, daß für die Mikroflotationsbehandlung Flockungsmittel zugegeben werden.

4. Verfahren nach einem der Ansprüche 1 bis 3, dadurch gekennzeichnet, daß für die hydrophoben Druckfarben eine Wäsche nach der Flotationsstufe geschaltet ist.
